(19) **Europäisches Patentamt**
**European Patent Office**
**Office européen des brevets**

(11) **EP 2 247 176 B1**

(12) **EUROPEAN PATENT SPECIFICATION**

(45) Date of publication and mention of the grant of the patent:
**01.02.2012 Bulletin 2012/05**

(51) Int Cl.:
**A01G 25/02** (2006.01)

(21) Application number: **08762636.2**

(22) Date of filing: **28.05.2008**

(86) International application number:
**PCT/GR2008/000043**

(87) International publication number:
**WO 2008/146055 (04.12.2008 Gazette 2008/49)**

(54) **EMITTER WITH POTENTIAL OF SELF-CLEANING**

AUSGEBER MIT SELBSTREINIGUNGSFÄHIGKEIT

GOUTTEUR AUTONETTOYANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.05.2007 GR 20070100320**

(43) Date of publication of application:
**10.11.2010 Bulletin 2010/45**

(73) Proprietors:
• **Dermitzakis, Emmanuil**
  **15669 Athens (GR)**
• **Dermitzakis, Aristeides**
  **15669 Athens (GR)**

(72) Inventors:
• **Dermitzakis, Emmanuil**
  **15669 Athens (GR)**
• **Dermitzakis, Aristeides**
  **15669 Athens (GR)**

(56) References cited:
**EP-A- 0 119 181     WO-A-03/045131**
**US-A- 3 780 946     US-A- 4 008 853**

## Description

The present invention refers to an irrigation emitter with the potential of self-cleaning of the inlet water filter.

*STATE OF THE ART*

The emitter constitutes the most sensitive element of drip irrigation due to its well known sensitivity on blocking problems. Each known emitter like e.g. the WO 03/045131, as a certain protection system in the water inlet, that is usually a static filter of grid or sieve. Such a filter consists of a flat rectangular or circular surface for the inlet of the water, swept horizontally and vertically by thin rectilinear plastic rods-elements, with their edges fixedly connected to the opposite sides of the inlet surface that they bridge, dividing in this way the available inlet surface to a great number of much smaller rectangular fixed and rigid openings. The dimension of the openings characterizes the quality of filtering.

These rectangular openings, the basic elements of filtering, are structures without the potential of movement or bending, they obstruct the passage of foreign bodies larger than a specific granulometry, that is definitely smaller than the smaller cross section of the meander like water paths within the emitter.

The disadvantage of the rigid static filters is that whereas they initially offer protection to meander like paths, constant accumulation of a layer of foreign bodies in their inlet causes blocking of the same rigid and fixed rectangular openings, it interrupts the inlet of water and finally renders the emitter useless.

It is known that there is no potential of intervention to the emitters for the cleaning of the inlet filters and the restoration of their operation. The only measures that could be taken until now, have been preventive e.g. thorough water purification, that has high cost though.

There are also more sophisticated emitters like US 3.780.946 A. This emitter does not have inlet water filter at all. The emitter has located transversely therein a number of spaced-apart resilient diaphragms each provided with a central orifice of a small cross-section in order to limit the flow in a low level, and capable of enlarging as a particle lodges in the orifice and causes a pressure differential between the two opposite surfaces of the diaphragm. As the orifice expands due to absolute resilient material, the particle is impelled through the orifice, there by unclogging the orifice. After that the particle is directed in to the next chamber and the process is repeated until the particle exits the emitter completely.

Disadvantages:

All the particles, small as well as large, proceed through the orifice until they exit the emitter because the same orifice is designed very narrow in order to limit the flow of the water.

Separated resilient diaphragms are needed which create first an additional cost for fixing and assembling and second are not compatible with the plastic material causing problems by the recycling process. Moreover these resilient diaphragms have to be assembled, a sophisticated and costly procedure.

In the same concept is also the US patent 4008853 A, while in the EPO 0119181 the water inlet filter as well as the meander like path is much more sophisticated. The emitter consists at least of two separate parts of which one of them is resilient. These parts are detached from each other during the phase of stopping of irrigation due to the resilient material or to a blade spring, in order to create a large opening in the inlet as well as in the meander like path area for the foreign particles to pass through. By the following phase of starting of the irrigation and the water entering in the emitter, the two separated parts reunite again in order to create the water inlet filter as well as the meander like path necessary for the function of the emitter. In case of clogging, the function of the emitter is completely stopped till the next irrigation starting phase. The disadvantages are obvious.

*BRIEF DESCRIPTION OF THE INVENTION*

The emitter of the present invention according to claim 1 has an incorporated filter in the water inlet, that consists of rectangular or other openings with the potential of bending of the elements that create them if particular pressure is exercised from the one side of their surface.

In case of total blocking of the openings of the elements from foreign bodies that are transferred with water, a difference of pressure is developed between the two surfaces of the above mentioned elements. This difference of pressure exercises forces that bend certain points of these elements and as a consequence the continuity on the layer of foreign bodies that covers the filter is disturbed and interrupted and flow is restored. These forces are exercised constantly until the above mentioned difference of pressure is eliminated and the flow and the operation of the emitter is restored.

Due to the minimum deflection sag required for the restoring of the flow, the elements are bent slightly in the limits of elasticity of the plastic material and therefore they are restored immediately afterwards in their previous position. In most systems, the deflection sag and further the created opening is controlled and limited by terminal limits in order to avoid the undesirable penetration of greater dimension of foreign bodies in the internal part of the emitter.

*DESCRIPTION OF THE DESIGNS*

Figure 1 displays the plan view of an inlet filter in a cylindrical emitter with free elements to the one edge.

Figure 2 displays section A-A of Figure 1.

Figure 3 displays section C-C of Figure 1.

Figure 4 displays section B-B of the linear d emitter of Figure 5 with inlet filter from parallel free elements to the one edge with S form.

Figure 5 displays the view by direction B of Figure 4, where the section of the emitter from the side of water inlet appears.

Figure 6 displays the view by direction A of Figure 4, where the meander like water path appears.

Figure 7 displays a section of a linear emitter with inlet filter by parallel elements closed on both edges, with arch form or form of greek II.

Figure 8 displays section Z-Z of the linear emitter of Figure 9 with composite inlet filter consisting of a combination of closed and free elements on the one edge.

Figure 9 displays the view by direction E of Figure 8.

Figure 10 displays the detail of the composite filter of figure 8 in bending upon the blocking phase.

Figure 11 displays in detail the view by direction A of figure 9 of the composite filter.

Figure 12 displays a view of a linear emitter where the elements are radially arrayed over and around a cavity and an inlet hole of water.

Figure 13 displays the section of a linear emitter with inlet filter from parallel free elements to the one edge and of bent form, which protect a longitudinal channel that has the inlet hole of the water.

*DETAILED DESCRIPTION OF THE INVENTION*

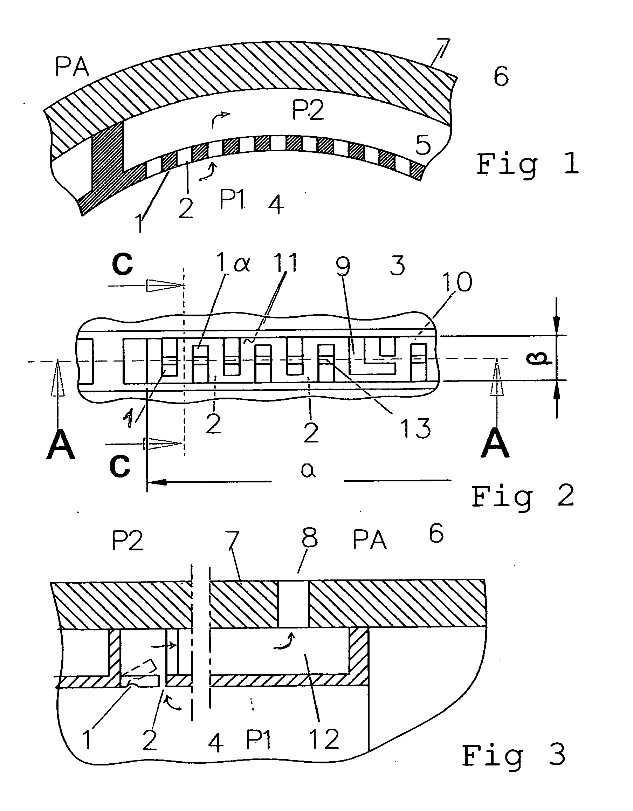

In Figures 1, 2, 3 a water filter is displayed in the inlet of a cylindrical emitter 3. The irrigation water flows under pressure P1 of the network in the internal 4 of plastic pipe 7, it is inserted initially in area 5 of the internally welded emitter 3 where pressure P2 prevails and then in the meander like path 12, where water sustains a predetermined drop of pressure in order to come out with a small water supply from hole 8 of pipe 7 in atmosphere 6 where atmospheric pressure PA prevails.

The available inlet surface of water with dimensions a*b, is divided to a great number of openings 2 that are created between the free successive elements 1 and 1a to the one edge and the walls 11 that enclose the filter.

Upon the proper operation of the system, where water is inserted freely in the emitter, the difference of pressure ΔP1-P1-P2, between areas 4 and 5 is minor, while the difference of pressure ΔPA=P1-PA, between areas 4 and 6, namely the network and the environment, has a fixed and high value that is provided from the water supply pump.

However, when the openings 2 of the filter are totally blocked from the accumulation of a layer of foreign bodies in their inlet, water does not flow in emitter 3, pressure P2 in area 5 is equal to atmospheric PA, and therefore the difference of pressure between areas 4 and 5 namely in front and behind the openings 2 is the following:

$$\Delta P1 = P1 - P2 = P1 - PA = \Delta PA.$$

Namely it has the value as maximum as possible.

This has as a consequence the development of forces from the side of area 4 on elements 1, 1a of the filter with the free edge, and as a consequence they are slightly bent to area 5 in the internal part of the emitter. By bending and this movement the continuity in the layer of foreign bodies that covers openings 2 of the filter is disturbed and interrupted, and as a consequence at a certain time water flows restored in the emitter and the difference of pressure ΔP1 is eliminated.

Due to the minimum deflection sag that is required for the restoration of the flow, elements 1 are bent within the limits of elasticity of the plastic material of the emitter, and therefore they are restored in their previous position by restoration of flow. It is evident that this procedure will be repeated automatically and constantly in any blocking and for as long as this endures.

In order to ensure the potential of bending elements 1 that may be obstructed by foreign bodies wedged in certain points of openings 2, the support points of the free elements 1 and 1a on the one edge are totally independent the one from the other and they are alternated constantly in the longitudinal opposite sides 11 of the walls so that their anticipated bending is counter-clockwise for the half and clockwise for the other. This fact together with the great number of elements, ensures great availability in movement and additionally the potential at least one of all to be able to be bent easily, with minimum force, freely and independently from the others.

In order to increase force and further the bending moment that is exercised, elements 1, 1a could be connected together by groups in common partial surfaces increasing the exercised force per section of support. Apart from bending, the forces that are developed upon blocking can simultaneously twist the free elements of the filter, as for instance it will happen in the asymmetric and bent 9, increasing the potential and the possibilities of a certain movement towards any direction.

In Figure 3 the section C-C of Figure 1 is displayed by the free element on the one edge of the filter in bending upon the phase of bending (chain-dotted lines).

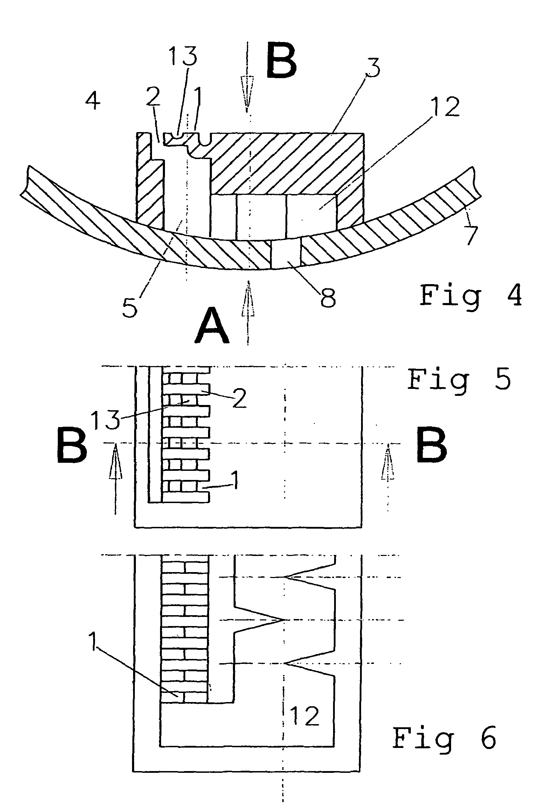

In Figure 4, Figure 5, Figure 6 a linear emitter is displayed with inlet filter consisting from parallel free elements 1 to the one edge by S form and notches 13 on the supporting base and on their body for the selective reduction of resistance and the increase of their inclination to bending. A terminal limit is observed for the deflection sag, that is the side wall 11 of the available active cross section a*b of the filter. Furthermore, the cross section of element 1 can be reduced gradually to the free edge in order to achieve uniform behavior and resistance upon bending. It has not been designed.

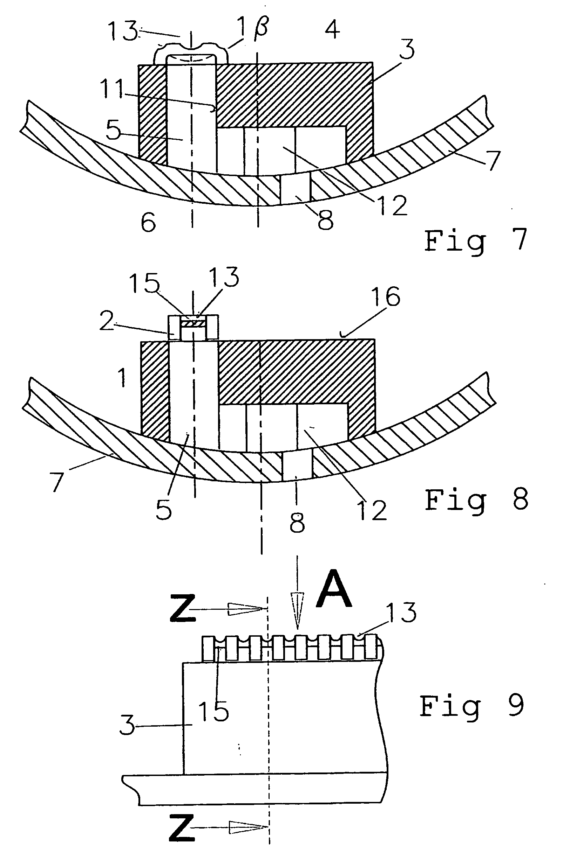

In Figure 7 the available cross section a*b of water inlet is divided in a great number of openings 2 that are created between the closed on the edges parallel elements 1b by the form of arc or greek II and the walls 11 of the filter, as opposed to the free respective elements 1 on the one edge of the previous figures. The new free active surface of the filter, is now extended not on the level but at the area, it is three-dimensional and clearly larger than the respective flat surface a*b. The potential of bending of elements 1b under the impact of hydraulic pressures is displayed by chain-dotted line.

This variation can operate satisfactorily due to the three-dimensional form of the filter even if the elements did not have increased bending potentials. It is self-evident that a variation can arise with another three-dimensional form such as pyramid etc.

In Figure 8, Figure 9, Figure 10 and Figure 11 a linear emitter 3 with filter consisting of a combination of two different elements is displayed, the closed element on the edges and extended element 15 and the free elements 1 on the one edge that are developed lengthwise of the extended element 15. These new composite elements are developed above the available surface a*b for filtering, covering it entirely and in three dimensional form. Water is inserted by three dimensions from the raised openings 2 in area 5. In case of blocking, the forces that are developed bend vertically to the direction of the emitter's body and especially towards area 5 the entire composite system of the elements, liberating entirely any foreign bodies of approximately equal granulometry with opening 2 and restoring the operation of the emitter.

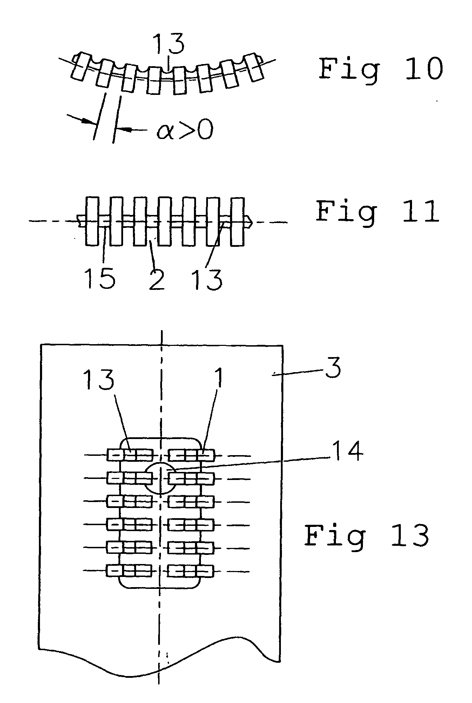

In Figure 10 the movement and the opening of the free elements 1 on the edges and the development between them of an angle α, larger than zero degrees, appears in detail.

In another variation, the entire composite system could not protrude, but to be downgraded and to be aligned with the back surface 16 of emitter 3. It has not been designed.

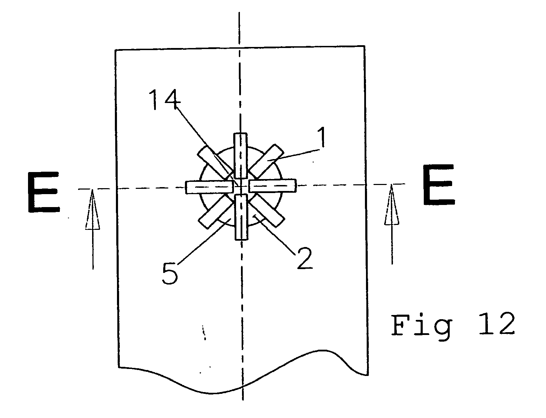

In Figure 12, Figure 13 and Figure 14, a linear emitter 3 with filter before a small inlet hole 14 of water is displayed.

In this case, as opposed to all previous cases, we do not have at our disposal a large free surface of a*b dimensions in order to divide it to a great number from smaller rectangular openings 2 and to protect hole 14. The problem is particularly difficult. However, we create a cavity 5 of larger extent than hole 14 that must be protected. In this case, free elements 1 are bent or arched in order to increase the inclination to bending and they are arrayed radially dividing the three-dimensional area over and around cavity 5 to smaller openings 2. Terminal limit for the path of elements in the phase of bending is the opposite respective element.

By the terminal limit of the bend, the system is generally controlled and openings 2 of specific and controlled dimensions are ensured after a bending or a possible blocking of one of the elements of the filter.

In Figure 13, cavity 5 is longitudinal for greater protection of hole 14. Namely it has the form of channel with the bent or arched and free to the one edge elements 1, arrayed in parallel, alternatively and opposite lengthwise of the side walls of the channel. The channel that is formed is now protected in its entire length ensuring greater filtering surface of three dimensions, with hole 14 to be connected vertically in a certain point of its path.

The design of the data of any variation with emphasis on the inclination of easy bending together with the great number and the potential of their independent movement, ensures the operation of the system even in case of blocking of the greater number of elements.

It is clear that new variations can be created with combinations of the already described variations.

**Claims**

1. Irrigation emitter of plastic material with the potential of self cleaning of its water inlet filter, consisting of a static filter of grid or sieve type with a great number of openings (2) and a meander like path (12) wherein the water sustains a predetermined drop of pressure in order to come out with minimized discharge from the outlet (8) of the pipe (7), in the atmosphere (6), **characterized in that** the great number of openings (2) of the inlet water filter are created by successive rods-elements (1,1a, 9) with the potential and the inclination of bending slightly in the limits of elasticity of the plastic material, if and so long particular pressure is exercised from the one side of their surface that occurs in the case of complete blocking of the openings (2) from foreign bodies that covers the filter, in order to disturb and interrupt the continuity in the layer of these foreign bodies, restoring the water flow in the emitter

2. Irrigation emitter according to claim 1, where the elements of filter (1) are free on the one edge.

3. Irrigation emitter according to claim 1, where the elements of filter (1b) are not free, but fixed on both edges, with the form of arc or greek II.

4. Irrigation emitter according to claims 1, 2 and 3, where the elements of filter (1) have notches (13) in selected points.

5. Irrigation emitter according to claim 1, where the cross section of elements (1) of the filter is gradually reduced.

6. Irrigation emitter according to claim 2, 4 and 5 where the deflection sag of the elements (1) is limited by terminal devices.

**7.** Irrigation emitter according to claim 2 and 4, where the elements (1) are bent.

**8.** Irrigation emitter according to claim 2, 4 and 6 where the elements (1) have S shape.

**9.** Irrigation emitter according to claim 2 and 4, where the elements are asymmetric.

**10.** Irrigation emitter according to claim 1, where the elements of the filter are combination of open elements to the one edge (1) and of closed elements (15).

**11.** Irrigation emitter according to claim 2, 4, 5, 8 and 9 where the elements are connected between them by groups.

**12.** Irrigation emitter according to claim 1, 2, 4,5,7,8 and 9, where the elements (1) are radially arrayed over and around a cavity (5) or an inlet hole of water (14).

**13.** Irrigation emitter according to claim 12, where the cavity (5) after the hole (14) is longitudinal.

**14.** Irrigation emitter according to claim 1, where the emitter is suitable for welding inside the pipe.

**15.** Irrigation emitter according to claim 1 and 14, where the emitter is of a cylindrical shape.


**Patentansprüche**

**1.** Ausgeber fuer Bewaesserung aus plastik Material mit Selbstreinigungsfahigkeit seines Wassereingangfilters, bestehend aus einem gitter-oder siebfoermigen statischen Filter mit einer grossen Nummer von Oeffnungen (2) und einem meanderfoermigen Kanal wo das Wasser sich ein Absinken des Druckes ertraegt, so dass das Wasser mit einer minimalen Menge aus der Austrittsoeffnung (8) des Rohres (7) in der Atmosphaere (6) austritt, charakterisiert dadurch dass die grosse Nummer der Oeffnungen (2) des Eingangfilters sich aus aufeinanderfolgenden stabfoermigen Elementen (1,1a,9) besteht, mit der Faehigheit und der Tendenz der leichten Biegung innerhalb des elastischen Bereiches des plastik Materials, wenn und solange eine bestimmte Pressung auf einer Seite seiner Oberflaeche angewendet wird, die im Falle eines kompletten Blokierens der Oeffnungen (2) aus fremden Koerpern die das Filter dekken hervorgerufen wird, damit die Kontinuitaet der Schichten der fremden Koerpern gestoert und zerstroert wird, und das Austreten des Wassers wiedererstattet wird.

**2.** Ausgeber fuer Bewaesserung nach dem Anschpruech 1, wobei die Elementen (1) eine freie Ende aufweisen.

**3.** Ausgeber fuer Bewaesserung nach dem Anschpruech 1, wobei die Elementen (1b) nicht frei sondern an beiden Enden fix sind, und die Form eines Bogens oder eines griechieschen n aufweisen.

**4.** Ausgeber fuer Bewaesserung nach den Anschpruechen 1,2,3, wobei die Elementen (1) Kerbstellen in ausgewoellten Stellen aufweisen.

**5.** Ausgeber fuer Bewaesserung nach den Anschpruechen 1,2,3, 4 wobei die Querschnittsflaechen der Elementen (1) des Filters allmaehlich sich reduziert werden.

**6.** Ausgeber fuer Bewaesserung nach den Anschpruechen 2,4, 5 wobei die Durchbiegung der Elementen (1) durch Anschlaege begrenzt ist.

**7.** Ausgeberfuer Bewaesserung nach den Anschpruechen 2,4, wobei die Elementen (1) gebogen sind.

**8.** Ausgeberfuer Bewaesserung nach den Anschpruechen 2,4, 6, wobei die Elementen (1) S-foermige Formen aufweisen.

**9.** Ausgeber fuer Bewaesserung nach den Anschpruechen 2,4, wobei die Elementen (1) asymmetrisch sind.

**10.** Ausgeber fuer Bewaesserung nach dem Anschpruech 1, wobei die Elementen des Filters eine Kombination aus einseitig offenen (1) und geschlossenen Elementen sind.

**11.** Ausgeber fuer Bewaesserung nach den Anschpruechen 2,4,5,8,9 wobei die Elementen in Gruppen miteinander verbunden sind.

**12.** Ausgeber fuer Bewaesserung nach den Anschpruechen 1,2,4,5,7, 8,9 wobei die Elementen (1) ueber oder um eine kavitaet (5), oder eine Eingangsoeffnung (14) radial angeodnet sind.

**13.** Ausgeber fuer Bewaesserung nach dem Anschpruech 12, wobei die kavitaet (5) nach der Eingangsoeffnung (14) lungitudinal Form aufweist.

**14.** Ausgeber fuer Bewaesserung nach dem Anschpruech 1, wobei der Ausgeber fuer innenrliche Schweissung geeignet ist.

**15.** Ausgeber fuer Bewaesserung nach den Anschpruechen 1, 14, wobei der Ausgeber zylindische Form hat.

**Revendications**

1. Goutteur d'irrigation en plastique avec possibilité d'auto nettoyage du filtre d'entrée de l'eau, constitué d'un filtre statique en tamis ou treillis comportant un grand nombre d'ouvertures (2) et une voie en forme de méandre (12) ou l'eau subit une baisse de la pression de façon à ce que le débit soit réduit au minimum dans la sortie (8) du tuyau (7) dans l'atmosphère (6) **caractérisé en ce que** le grand nombre d'ouvertures (2) est créé au moyen d'éléments successifs ( 1, la, 9) avec possibilité et prédisposition d'un léger fléchissement dans la limite de l'élasticité du matériau plastique, si et aussi longtemps qu'une pression est exercée sur un coté de leur surface et laquelle provoque -dans le cas d'obstruction totale des ouvertures par des particules recouvrant le filtre - la rupture de la continuité dans la couche des particules afin de rétablir le flux de l'eau dans le goutteur.

2. Goutteur d'irrigation selon la revendication 1, où les éléments du filtre (1) sont libres dans l'une extrémité.

3. Goutteur d'irrigation selon la revendication 1, où les éléments du filtre (1b) ne sont pas libres mais fixés dans les deux extrémités sous forme d'arc ou de P grec (II)

4. Goutteur d'irrigation selon les revendications 1, 2 et 3, où les éléments du filtre (1) présentent des encoches (13) dans des points sélectionnés.

5. Goutteur d'irrigation selon la revendication 1, où la section des éléments (1) est réduite progressivement.

6. Goutteur d'irrigation selon les revendications 2, 4 et 5, où la distance de fléchissement des éléments (1) est limitée par des dispositions terminales.

7. Goutteur d'irrigation selon les revendications 2 et 4, où les éléments (1) sont fléchis.

8. Goutteur d'irrigation selon les revendications 2, 4 et 6, où les éléments (1) prennent la forme s'un S.

9. Goutteur d'irrigation selon les revendications 2 et 4, où les éléments sont asymétriques (9).

10. Goutteur d'irrigation selon la revendication 1, où les éléments constituent une combinaison d'éléments ouverts à l'une extrémité (1) et d'éléments fermés (15).

11. Goutteur d'irrigation selon les revendications 2, 4, 5, 8 et 9, où les éléments sont reliés entre eux en groupes.

12. Goutteur d'irrigation selon les revendications 1, 2, 4, 5, 7, 8 et 9, où les éléments (1) sont disposés en rayon sur et autour d'une cavité (5) et un orifice d'entrée de l'eau (14).

13. Goutteur d'irrigation selon la revendication 12, où la cavité (5) après l'orifice (14) est longitudinale.

14. Goutteur d'irrigation selon la revendication 1, où le goutteur peut être collé à l'intérieur du tuyau.

15. Goutteur d'irrigation selon les revendications 1 et 14, où le goutteur est en forme de cylindre.

PA

7

6

P2

5

Fig 1

1  2  P1  4

C  1 α  11  9  3  10

A  β

1  2  2  13  A

C  a  Fig 2

P2  7  8  PA  6

1  2  4  P1  12  Fig 3

Fig 4

Fig 5

Fig 6

Fig 7

Fig 8

Fig 9

13

Fig 10

α>0

Fig 11

15  2  13

13  1  3

14

Fig 13

14

1

E | E

5

2

Fig 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03045131 A
- US 3780946 A
- US 4008853 A
- EP O0119181 A